# EUROPEAN PATENT APPLICATION

(11) **EP 0 756 915 A2**
(43) Date of publication of application: **05.02.1997**
(21) Application number: 96305674.2
(22) Date of filing: 01.08.1996
(51) Int. Cl.: B23K 11/25

(54) **Apparatus for controlling inverter resistance welding**

(30) Priority: 02.08.1995 JP 216717/95; 10.08.1995 JP 225934/95
(71) Applicant: MIYACHI TECHNOS CORPORATION, Noda-shi, Chiba-ken (JP)
(72) Inventor: Moro, Kyoji, Noda-shi, Chiba-ken (JP); Shimada, Hiroshi, Noda-shi, Chiba-ken (JP)
(74) Representative: Spall, Christopher John

(57) **Abstract**

An inverter resistance welding control or power supply apparatus includes a clock generator (62) which generates a clock signal defining a switching cycle of an inverter (16) in a resistance welding machine, a device (60) for preselecting a predetermined reference value corresponding to a desired current peak, a current sensor (50) for detecting primary or secondary current of the welding machine, and an inverter control (CPU 40) for controlling the inverter on a switching cycle-by-cycle basis. Specifically, it turns on the inverter in response to a leading edge of the clock signal, and turns it off either when the current detected signal has reached the reference value or when the clock signal has reached a trailing edge. The control apparatus further includes a magnitude evaluator for measuring a magnitude of the current from the detected signal, which magnitude is expressed in root mean square, arithmetic mean or averaged peak value. The control apparatus further includes a reporter monitor for reporting, based on the measured results, information useful to determine normal or defective operation. There may be further provided a lack-of-secondary current detector for operatively and reliably detecting lack of the secondary current by monitoring the primary current.

## Description

### Background of the Invention

This invention generally relates to apparatus for controlling welding current of an inverter resistance welding machine.

For constant-current control of an inverter resistance welding machine in which primary or secondary current thereof generally matches a preselected value of desired current, a new technology, called "current peak control" or "current limiter control", has been proposed and developed into use.

In accordance with principles of the current peak or limiter control, the primary or secondary current of the welding machine is detected into an instantaneous value or waveform thereof. In each one or half cycle of the inverter frequency, the detected signal, indicative of an instantaneous value of electric current, is compared with a predetermined reference value or "limiter" level. When the detected signal has reached the reference or limiter level, an inverter control switches the inverter into nonconducting. In principle, the current peak or limiter control assures free-of-overshoot and quick rise of the welding current since the current peaks are maintained.

A prior-art inverter resistance welding control apparatus with the current limiter control feature detects when electric current of the welding machine has reached a reference level in each switching cycle of the inverter. Such control apparatus lacks, however, a monitoring function or feature that detects or monitors a magnitude or quantity of actual welding current (e.g., effective or root-mean-square value, or average or arithmetic mean value). The effective value of the actual welding current is subject to changes in the workpiece load resistance and also subject to variations in a supplied voltage. The prior art inverter resistance welding control apparatus with the current peak limiting feature, which relies on maintaining feature of current peaks, has disregarded variations in the effective or average value of the actual welding current. Such variations can eventually lead to variations in the results or products of welding in terms of quality.

In accordance with the principles of the current limiter control, electric current of the inverter welding machine "normally" reaches a reference or limiter level in each cycle of the inverter, thus maintaining current peaks. Depending on operational condition or environment of the welding machine, however, such as dirty electrodes, increased resistance of the heated workpiece in progress or a supplied voltage drop, the electric current can fail to reach the limiter level within a cycle of the inverter.

The prior art inverter resistance welding control apparatus of such a current limiter type lacks means for monitoring the operation of the current limiter control. Therefore, a plurality of welding operations are repeatedly performed without determining whether each welding operation has been performed normally. Therefore, an operator must check the welded results or final products at the end by visual inspection. Clearly such visual inspection imposes a burden on the part of an operator. Without it, the prior art apparatus of the current limiter type can faultily and helplessly yield defective products in row.

In inverter resistance welding machines, the secondary circuit may once in a while be troubled with electrical or mechanical disconnection, as the secondary conductor or cable for connecting a welding transformer to a welding electrode being broken midway or an insulator material accidentally interposed between a workpiece and an electrode. In such cases, no or very little current will flow in the secondary circuit even if an inverter in the primary circuit operates. In the prior art, the lack of the secondary current is determined from null or zero value of the measured current.

This method may be reliable if the secondary current is directly detected. However, if primary current is detected and used for constant current control, the method cannot reliably detect lack of the secondary current since, during the operation of an inverter, magnetizing current flows in a welding transformer in absence of secondary current, so that the primary current cannot be null or zero, which may be misleadingly taken as presence of secondary current.

### Summary of the Invention

It is, therefore, an object of the invention to provide an inverter resistance welding electric power supply apparatus of constant-current control with current-peak limiting, capable of monitoring a magnitude of the actual current and reporting useful information to an operator, thus facilitating quality control of products of resistance welding.

Another object of the invention is to provide an inverter resistance welding control apparatus of current-peak limiting type, capable of monitoring and reporting operation of the current-peak limiter control, thus facilitating quality control of products with increased productivity.

A still further object of the invention is to provide an inverter resistance welding control, capable of reliably detecting lack of secondary current by directly monitoring primary current, thus facilitating quality control for increased productivity.

In accordance with an aspect of the invention, there is provided an inverter resistance welding electric power supply apparatus for controlling switching operation of the inverter in such a manner that primary or secondary current of an inverter resistance welding machine generally coincides with a desired preselected current value, comprising:
clock generating means for generating a clock that defines a unit switching cycle of said inverter;
reference value preselecting means for preselecting a predetermined reference value corresponding to said preselected current value;
current detecting means for detecting said current during welding operation;
inverter controlling means for controlling said inverter on a switching cycle-by-cycle basis in such a manner that said inverter is turned on in response to a leading edge of said clock and that said inverter is turned off either when an output signal from said current detecting means has reached said reference value or when said clock has reached trailing edge thereof;
average current value measuring means for measuring, from a detected current signal from said current detecting means, average current value on a switching cycle-by-cycle basis; and
output means for outputting, based on said average current values provided by said average current value measuring means during the welding operation, current monitoring information useful to determine whether the welding operation has been performed normally or not.

For preference, the output means comprises:

average value computing means for computing an average value of integrated current values throughout the welding operation; and
display means for outputting said average value of integrated current values from said average value computing means, as said current monitoring information.

In the alternative, the output means may comprise:
average value computing means for computing an average value of integrated current values throughout the welding operation;
monitoring value preselecting means for preselecting a desired monitoring value;
determining means for comparing said average value of integrated current values from said average value computing means with said monitoring value to thereby determine whether the welding operating has been performed normally or not; and
display means for outputting results of said determining, as said current monitoring information.

In accordance with another aspect of the invention, there is provided an inverter resistance welding electric power supply apparatus for controlling switching operation of the inverter in such a manner that primary or secondary current of an inverter resistance welding machine generally matches a desired preselected current value, comprising:
clock generating means for generating a clock that defines a unit switching cycle of said inverter;
reference value preselecting means for preselecting a predetermined reference value corresponding to said preselected current value;
current detecting means for detecting said current during welding operation;
inverter controlling means for controlling said inverter on a switching cycle-by-cycle basis in such a manner that said inverter is turned on in response to a leading edge of said clock and that said inverter is turned off either when an output signal from said current detecting means has reached said reference value or when said clock has reached a trailing edge thereof;
effective current value measuring means for measuring an effective value of said current from a detected current signal from said current detecting means for a predetermined period of time and on a switching cycle-by-cycle basis; and
output means for outputting, based on said effective values provided by said effective current value measuring means during welding operation, current monitoring information useful to determine whether the welding operation has been performed normally or not.

For preference, the output means comprises:
average value computing means for computing an average value of said effective current values in the welding operation; and
display means for outputting said computed average value, as said current monitoring information.

In the alternative, the output means may comprise:
average value computing means for computing an average value of said effective current values throughout welding operation;
monitoring value preselecting means for preselecting a desired monitoring value;
determining means for comparing said computed average value with said monitoring value to thereby determine whether the welding operation has been performed normally or not; and
display means for outputting results of said determining as said current monitoring information.

In accordance with a further aspect of the invention, there is provided an inverter resistance welding control apparatus for controlling switching operation of the inverter in such a manner that primary or secondary current of an inverter resistance welding machine generally matches a desired preselected current value, comprising:
clock generating means for generating a clock that defines a unit switching cycle of said inverter;
limiter level preselecting means for preselecting a predetermined limiter level corresponding to said preselected current value;
current detecting means for detecting said current during welding operation;
inverter controlling means for controlling said inverter on a switching cycle-by-cycle basis in such a manner that said inverter is turned on in response to a leading edge of said clock and that said inverter is turned off either when an output signal from said current detecting means has reached said limiter level or when said clock has reached a trailing edge thereof;
current measuring means for measuring value of said current at a time when said inverter is turned off;
normal/defective determining means for determining, based on data of said measured values by said current measuring mean during the welding operation, as to whether the welding operation has been performed normally or not; and
output means for outputting results of said determining.

For preference, the normal/defective determining means comprises:
average value computing means for computing an average value of said measured current values provided by said current measuring means during the welding operation;
monitoring value preselecting means for preselecting a monitoring value for normal/defective determining; and
comparing means for comparing said computed average value form said average value computing means with said monitoring value.

In accordance with a still further aspect of the invention, there is provided an inverter resistance welding control apparatus for use in an inverter resistance welding machine in which a commercial AC current is rectified into DC current which is converted by an inverter into pulsed AC current of predetermined frequency which is transformed by a welding transformer into a transformed pulsed AC current which is rectified by a rectifier into DC current which is supplied to a workpiece via a welding electrode, comprising:
primary current measuring means for measuring primary current of said resistance welding machine; and
lack-of-current detecting means for comparing a measured value of primary current provided by said primary current measuring means with a predetermined monitoring value which is smaller than a preselected value of desired current and greater than a value of magnetizing current of said welding transformer to thereby operatively detect lack of secondary current of said resistance welding machine.

### Brief Description of the Drawings

The above and other objects, features and advantages of the invention will become more apparent from the following description taken in conjunction with the drawings in which
Fig.1 is a block diagram showing an arrangement of a first embodiment of an inverter resistance welding control apparatus in accordance with the invention;
Fig.2 is a diagram of signal waveforms showing peak-current control and current monitor in the arrangement of Fig.1;
Figs.3 and 4 are flowcharts of a main process executed by CPU, showing operation of the first embodiment in Fig.1 in accordance with invention;
Fig.5 is a block diagram of a modified arrangement for determining an effective value of electric current in accordance with the invention;
Fig.6 is a block diagram showing an arrangement of a second embodiment of an inverter resistance welding control apparatus in accordance with the invention;
Fig.7 is a diagram of signal waveforms showing current limiter and monitor functions in the arrangement of Fig.6;
Fig.8 is a flowchart of a weld routine of the second embodiment in Fig.6, executed by CPU during welding operation, in accordance with the invention;
Fig.9 is a flowchart of a report routine of the second embodiment in Fig.6, executed by CPU after welding operation, in accordance with the invention; and
Fig.10 shows visual presentations visually displayed on a display in the second embodiment for reporting current monitoring results in accordance with the invention.

### Detail Description of the Preferred Embodiments

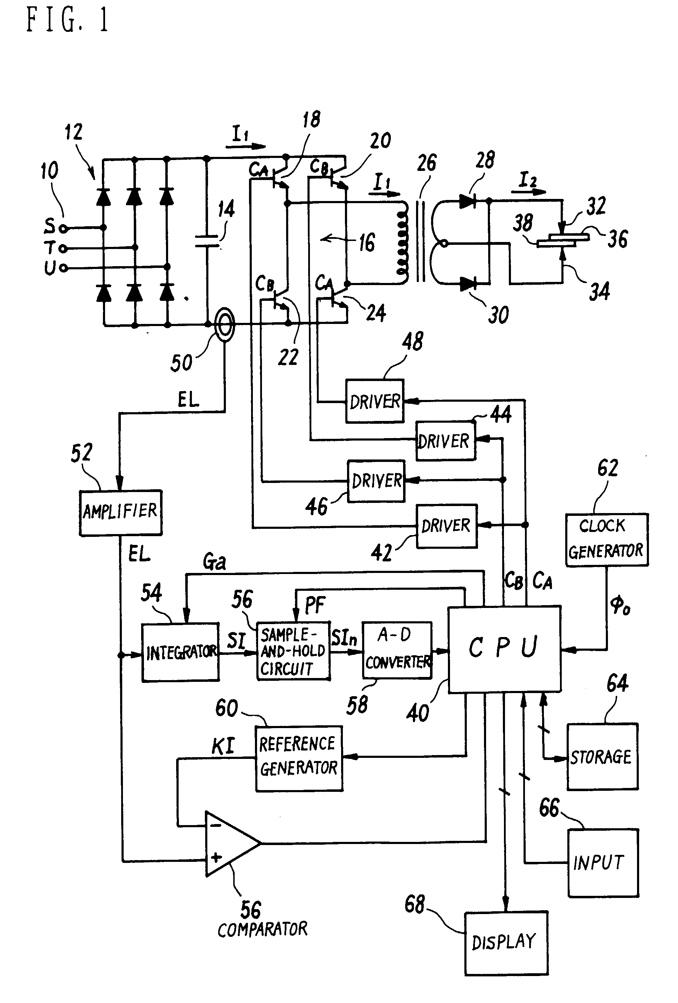

A first embodiment of an inverter resistance welding control apparatus of the invention is shown in Figs.1 to 5.

Referring first to Fig.1. there is shown an arrangement of an inverter resistance welding machine including the embodiment of the inverter resistance welding control apparatus. In the illustrated resistance welding machine, a three-phase commercial AC power supply terminal 10 is connected to a three-phase rectifier 12 which provides rectified or DC current. The DC current is smoothed by a capacitor 14 and then supplied to an inverter 16.

The inverter 16 includes switching elements, such as giant transistors (GTR) 18-24, and converts the DC current into pulsed AC current having a high frequency. The switching operation of the inverter 16 is controlled by CPU 40 in the resistance welding power supply apparatus which supplies control pulses C_{A} and C_{B} via drivers (42, 48) and (44, 46) to GTRs (18, 24) and GTRs (20, 22) respectively.

The high frequency AC voltage from the inverter 16 is applied across the primary coil of a welding transformer 26. A step-down AC voltage of high frequency is induced in the secondary coil of the welding transformer 26. A rectifier including a pair of diodes 28 and 30 converts the transformed AC current to DC current. The DC current is supplied, as welding current I₂, to workpieces 36 and 38 via welding electrode 32 and 34.

A current sensor 50, such as Hall current transformer, is provided in a primary conductor of the welding machine, extending between the primary capacitor 14 and the inverter 16. The current sensor 50 outputs a voltage signal EI (detected current signal) indicative of an instantaneous value or waveform of the primary current I₁.

The current sensor 50 output is connected via an amplifier 52 to an input to an integrator 54 and also connected to an input to a comparator 59. The integrator 54 integrates the current detected signal EI with respect to time. The operation of the integrator 54 is controlled by CPU 40 according to a control signal GQ supplied therefrom. The integrator 54 provides an integrated signal SI which is supplied to a sample-and-hold circuit 56.

The sample-and-hold circuit 56 samples and holds the integrated signal SI at appropriate timing. The operation of the sample-and-hold circuit 56 is controlled by CPU 40 according to a control signal PF supplied therefrom. The sample-and-hold circuit 56 output is connected to an analog-to-digital, converter 58 which converts an analog integrated signal sample SIn into a corresponding digital signal which is read by CPU 40 at predetermined timing.

Under the control of CPU 40 another input to the comparator 59 receives, from a reference value generator 60, a reference value (voltage) KI corresponding to a preselected current value (current peak value).

CPU 40 is connected to an inverter clock generator 62, a storage 64, an input device 66, a display 68 etc., directly or indirectly via interface circuits (not shown).

The clock generator 62 generates a master clock signal φ₀ which is supplied to CPU 40. The clock signal φ₀ has a frequency of, say, 4kHz which defines a switching cycle of the inverter 16. The storage 64 includes a read only memory (ROM) and a random access memory (RAM). The ROM stores programs according to which CPU 40 is controlled. The RAM stores various preselected data, measured data, computed data etc. The input device 66 includes keys disposed on a control panel of a main control unit and an interface circuit which is connected to an external device via a communication cable (not shown). The display 68 includes a display unit and indicators disposed on the control panel of the control unit.

The input device 66 enters various data. In particular, the input device 66 is used to enter current peak data indicative of a desired current limiter level or peak to be used for the constant-current peak control, data indicative of a desired current magnitude (expressed in average or effective current) to be used for monitoring and a monitoring value to be used for determination of normal/defective welding operation. The entered data from the input device 66 are stored or registered into the storage 64. The monitoring value may be set to the desired current value or magnitude minus five percent thereof.

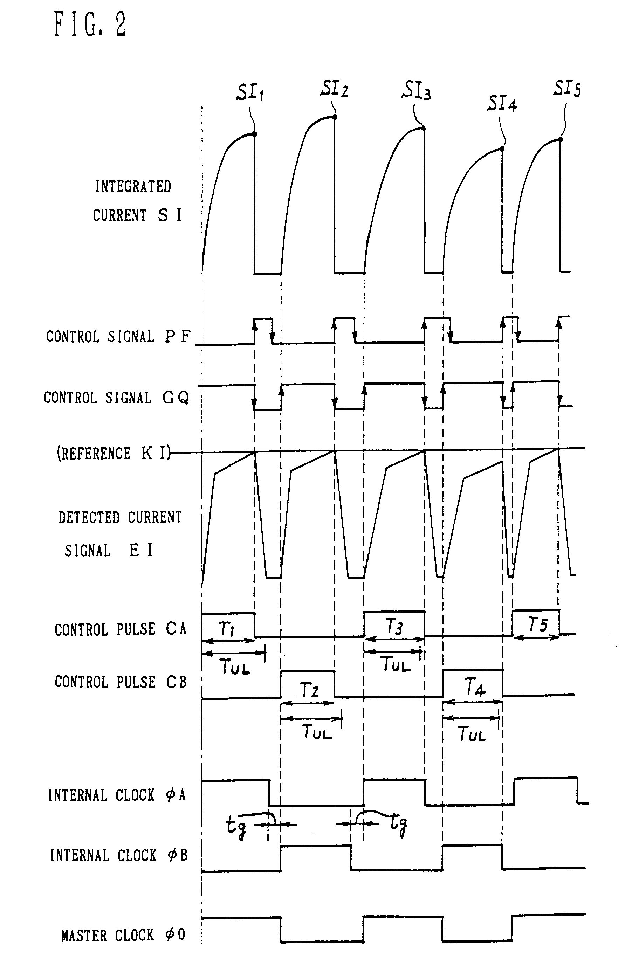

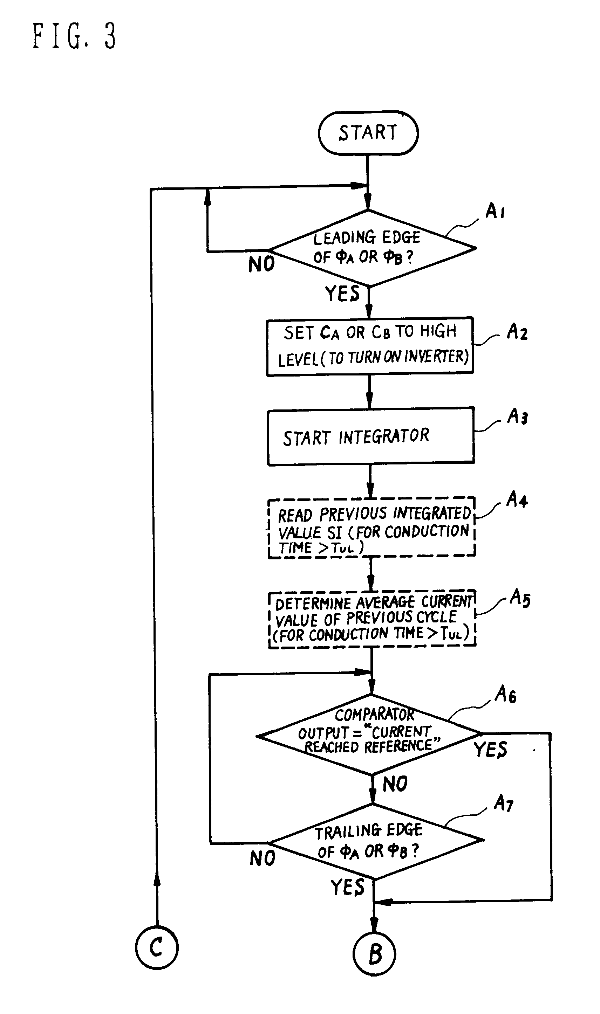

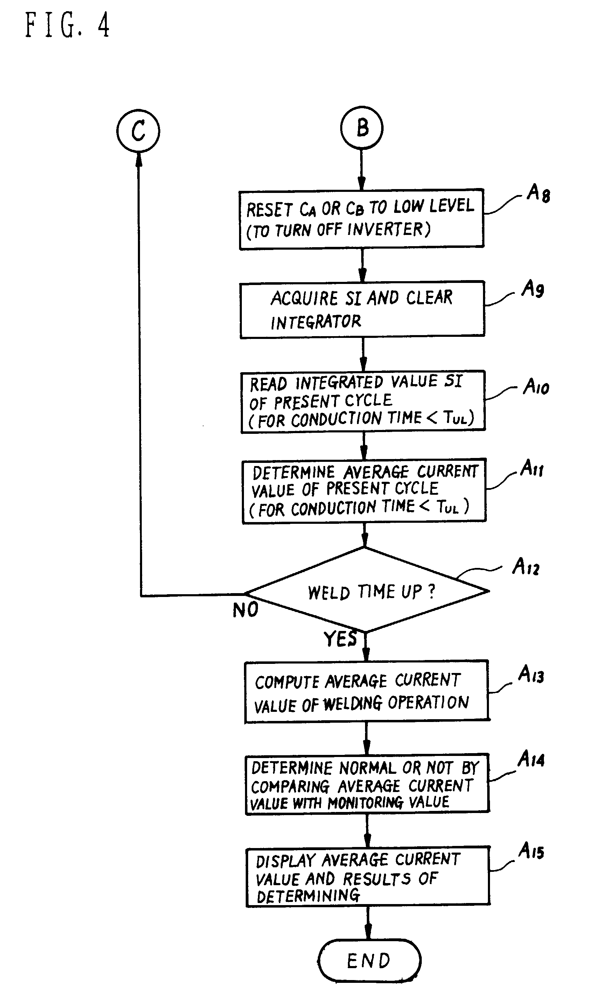

Fig.2 shows signal waveforms of various parts of the arrangement of Fig.1 to illustrate current peak control feature and current monitoring feature of the invention. Figs.3 and 4 are flowcharts of a weld and report routine execute by CPU 40, thus showing operation of the control apparatus in Fig.1. The operation of the first embodiment will now be described by reference to Figs.2 to 4.

During welding operation. CPU 40 receives the master clock signal φ₀ from the inverter clock generator 62 and generates, therefrom, a two-phase internal clock signal φ_{A} and φ_{B}. Using two-phase internal clock signals φ_{A} and φ_{B}, CPU 40 produces inverter control pulses C_{A} and C_{B} alternately.

One of the control pulses, C_{A} is supplied to a control input to GTR18 and 24 in the inverter 16 via drivers 42 and 48. The GTR 18 and 24 turns on in response to a leading edge of the control pulse C_{A} and are placed in conduction until the control pulse C_{A} transits back to low level. Thus, a high-level pulse of the control pulse C_{A} essentially specifies conduction interval of the GTR 18 and 24. When GTR 18 and 24 are conducting, primary current I₁ having a positive polarity flows through the primary coil of the welding transformer 26. Another control pulse C_{B} is supplied to GTR 20 and 22 in the inverter 16 via the drivers 44 and 46. A high-level pulse of the control pulse C_{B} essentially specifies an interval during which the GTR 20 and 22 are conducting. When GTR 20 and 22 are placed in conduction, primary current I₁ having a negative polarity flows through the primary coil of the welding transformer 26.

There is provided a time margin or difference tg between two-phase internal clock signals φ_{A} and φ_{B}. The time margin tg value is chosen to assure a phase or time difference between the control pulses C_{A} and C_{B} to safely prevent the inverter 16 from short-circuiting.

During operation of the inverter 16, pulsed current I₁ flows into the inverter 16 and thus detected by the current sensor 50 which generates an analog signal EI (detected current signal) indicative of an instantaneous value or waveform of the primary current I1.

Referring to Fig.3. for example, CPU 40 responds to the clock signal φ_{A} at its leading edge (step A₁) and sets the control pulse C_{A} to high level to thereby turn on GTR 18 and 24 (step A₂). The turning-on of the GTR 18 and 24 causes a primary current I₁ to rise. At the same time CPU 40 sets the control signal GQ to high level to start the integrator 54 (step A₃).

After executing the steps A₂ and A₃, CPU 40 may read a previous integrated current sample SIₙ₋₁ from the sample-and-hold circuit 56 via the analog-to-digital converter 58, as shown in step A₄, if a previous conduction interval of the previous cycle has exceeded a limit T_{UL}. From the integrated current value SIₙ₋₁ of the previous cycle and from the previous conduction interval or pulse width Tₙ₋₁ CPU 40 computes an average or arithmetic mean value MIₙ₋₁ of electric current of the previous cycle (step A₅ ). The average value MIₙ₋₁ is recorded into the storage 64.

As the primary current I₁ normally develops or increases in a clock φ_{A} cycle, the detected signal EI may reach the reference value KI. Then comparator 59 output changes to high level from low level. In response to the change of the level of the comparator 59 output (step A₆), CPU 40 changes the control pulse C_{A} to low level to thereby turn off GTR 18 and 24 (step A₈).

Depending on operational condition, such as increased resistance of the secondary circuit or a drop in the supplied three-phase AC voltage, the primary current I₁ cannot develop sufficiently, so that the detected current signal EI cannot reach or exceed the reference value KI within that cycle. Then, CPU 40 will respond to a trailing edge of the clock signal φ_{A} (step A₇), changing the control pulse C_{A} to low level to thereby forcibly turn off GTR 18 and 24 (step A₈). The primary current I₁ goes down or releases in response to the turning-off of the GTR 18 and 24.

At the same time CPU 40 causes the sample-and-hold circuit 56 to hold an integrated current value SIₙ from the integrator 54 by sending a high-level control signal PF thereto, and then clears the integrator 54 by sending a low-level control signal GQ thereto (step A₉).

Then CPU 40 may read, within the present clock φ_{A} cycle, the output (integrated current value SIₙ) of the sample-and-hold circuit 56 via the analog-to-digital converter 58 if the conduction interval or pulse width Tn of the present cycle was less than the upper limit T_{UL} (step A₁₀). From the present integrated current value SIₙ and the present current conduction interval or pulse width Tn, CPU 40 computes average or arithmetic mean value MIₙ of the present cycle electric current (step A₁₁). The average value MIₙ of the present cycle is recorded into the storage 64. The conduction pulse interval Tn of the present cycle indicates the pulse width of a present high-level pulse of the control signal C_{A}. CPU 40 may measure the current conduction interval Tn by counting or measuring the time from a leading edge of the control pulse C_{A} to the next trailing edge thereof.

In a clock φ_{B} cycle, CPU 40 supplies a high-level pulse of the control pulse C_{B} to the GTR 20 and 22 in the inverter 16 in the manner as described with respect to the clock φ_{A} cycle. In this manner, on a cycle-by-cycle (φ _{A}-by-φ_{B}) basis, CPU 40 performs constant-current peak control and process of determining or measuring average or arithmetic mean value of the current.

After the welding operation has been completed (step A₁₂), CPU 40 computes, from all records, in the storage 64, of average or arithmetic mean values MI₁, MI₂, etc., for all cycles of the welding operation, an overall average value MI thereof (step A₁₃). Then CPU compares the entire cycle or overall current average value MI with a preselected monitoring value DI (normal limit) which may be equal, for instance, to the preselected value of a desired average current minus 5 percent thereof). If MI is greater than or equal to DI, CPU 40 determines the present welding operation to be normal whereas MI is smaller than DI, it determines the present welding operation to be defective (step A₁₄ ). Then CPU 40 causes the display 68 to visually display the results of the determining as well as the overall current average value MI (step A₁₅).

In this manner the present inverter resistance welding control apparatus measures a current average value as a parameter representative of a magnitude of the actual electric current while performing current peak limiting control, and it determines as to whether the measured current average value is within a normal range or not. Therefore, the present control apparatus can provide current monitoring information useful to determine whether the welding operation has been performed normally or not. In doing so, the present control apparatus can contribute to improved quality control of the resistance welding and can provide a highly reliable current peak control.

In particular, the present embodiment checks if the current has failed to reach a reference peak level within a cycle, and measures an average or effective current value, thus capable of successfully providing useful and reliable current monitoring information.

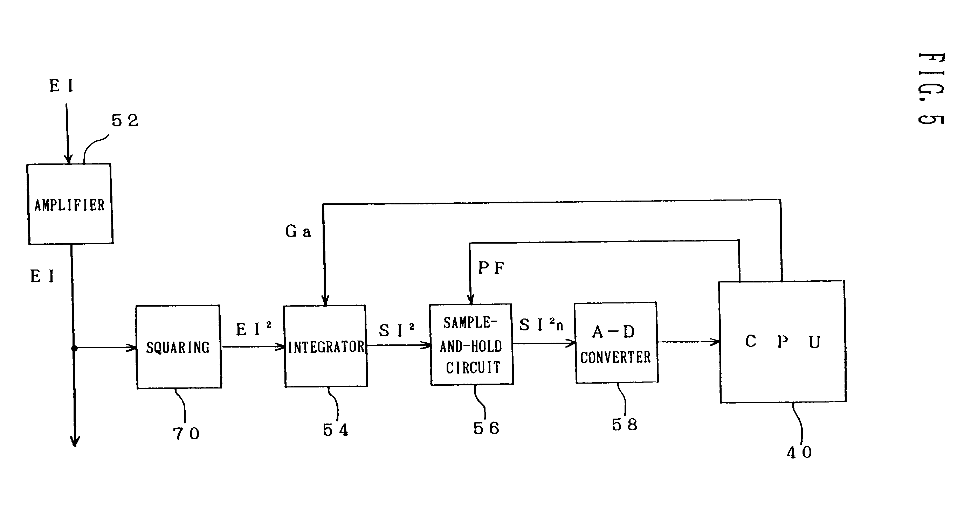

In the present embodiment, the arithmetic mean or average value of the current is measured as a parameter to be monitored. It may be so modified as to measure or determine an effective value of actual current. Fig.5 shows an arrangement for determining an effective value of the actual electric current.

Referring to Fig.5, a squaring circuit 70 is interposed between the amplifier 52 and the integrator 54. The squaring circuit 70 squares the input signal or detected current signal instantaneous values EI. The integrator circuit 54 and sample-and-hold circuit 56 operates at appropriate timings, as in the first embodiment, according to control signals GQ and PF. Thus, CPU 40 reads an integrated value of instantaneous current values each squared, SI², rather than an integrated value SI of instantaneous current values in the first embodiment. From the data SI², CPU 40 computes a root thereof to thereby obtain an effective value of electric current.

In the above or first embodiment. the integrator 54 integrates the detected current signal EI for a time from the start of current to reaching the reference level, corresponding to a pulse width of a high-level pulse of the control pulse C_{A} or C_{B} . This measuring method ignores or disregards that portion of the electric current which falls down to zero from the reference level. However, the current falling part does not essentially affect the weld quality so that excluding the current falling portion from measurement of current (average or effective value) will not affect the accuracy of the monitoring information or determination of the normal or defective welding operation.

It is, of course, very easy to include the current falling portion into measurement. This is accomplished by terminating integrating operation of the integrator 54 and by starting sample and hold operation of the sample-and-hold circuit 56 at a trailing edge of internal clock φ_{A} or φ_{B} (instead of a trailing edge of control pulse C_{A}). By extending or deferring an end of the integrating operation in this manner, the integrated signal from the integrator 54 includes the current falling portion, which is thus reflected in the measured results, such as current average (arithmetic mean) value, or effective value of the electric current.

Whereas, in the above embodiment, the integrator 54. sample-and-hold circuit 56, the comparator 59, the reference generator 60, squaring circuit 70 etc., are implemented by analog circuits. they may be implemented by digital circuits, partly or entirely. The function of these circuits may also be implemented by a software program control ling CPU.

Whereas, in the above embodiment, to provide current monitoring information, it is determined an overall or entire average value of the measured data, (arithmetic mean or average values of current, or effective current value) for all cycles of the weld time throughout the welding operation, the entire measured data or the entire average current value is used to determine normal/defective welding operation, it may be modified so as to display measured data on a cycle-by-cycle basis for normal/defective weld determination. For output of the current monitoring information, not only visual presentation using a display panel but also a print-out (hard copy) presentation using a printer may be used. In addition, such output may be provided or presented not only by and on a main control unit but also by and on a remote terminal unit via a communication interface.

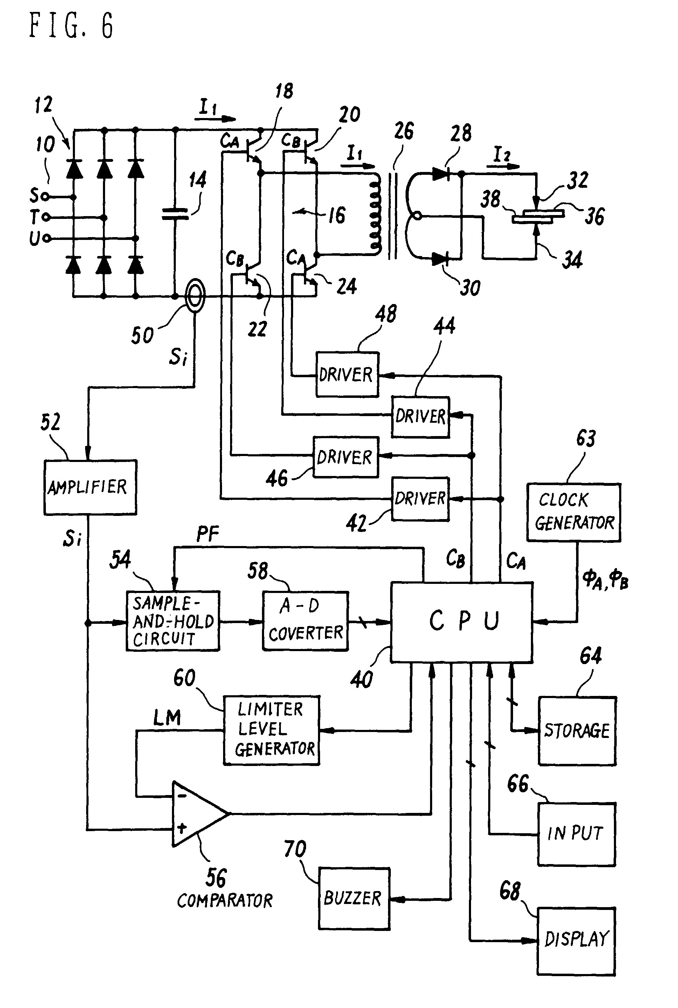

A second embodiment of an inverter resistance welding control apparatus will now be described by reference to Figs.6 to 10. Alike components and functions are designated by alike numerals or symbols throughout the drawings.

Referring to Fig.6. the amplifier 52 output is connected to an input to the comparator 59. The amplifier 52 output is also connected the input to the sample-and-hold circuit 56. Another input to the comparator 59 receives a limiter level (reference) signal K_{I} from the limiter level (reference) generator 60 under the control of CPU 40. The reference voltage signal KI represents a preselected value of a desired current peak. A clock generator 63 supplies a two-phase clock signal φ_{A}, φ_{B} having a frequency of, say, 4kHz which specifies a switching cycle of the inverter 16. A buzzer 70 is also connected to CPU 40 via an interface circuit (not shown).

In the illustrated embodiment, the input device 66 enters a first monitoring value for normal/defective weld determination and second monitoring value for lack of secondary current determination. These monitoring values are stored and registered into the storage 64. The first monitoring value [Ij] specifies normal range of current which may be, for instance, the preselected value of the desired current plus minus 5 percent. The second monitoring value [Ik] may preferably be set to a value (for instance, 350 amperes in terms of the secondary circuit) slightly greater than the magnetizing current of the welding transformer 26 (which may be 200 amperes, expressed as secondary current).

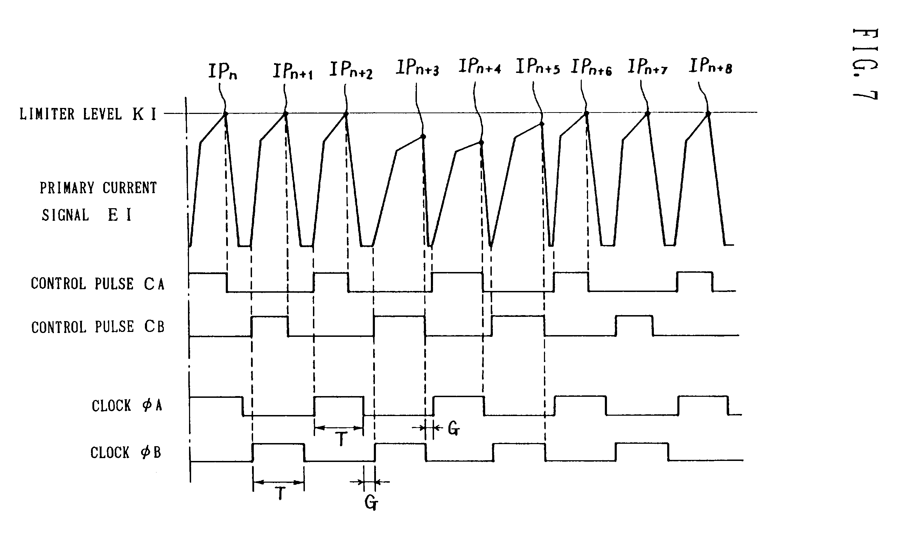

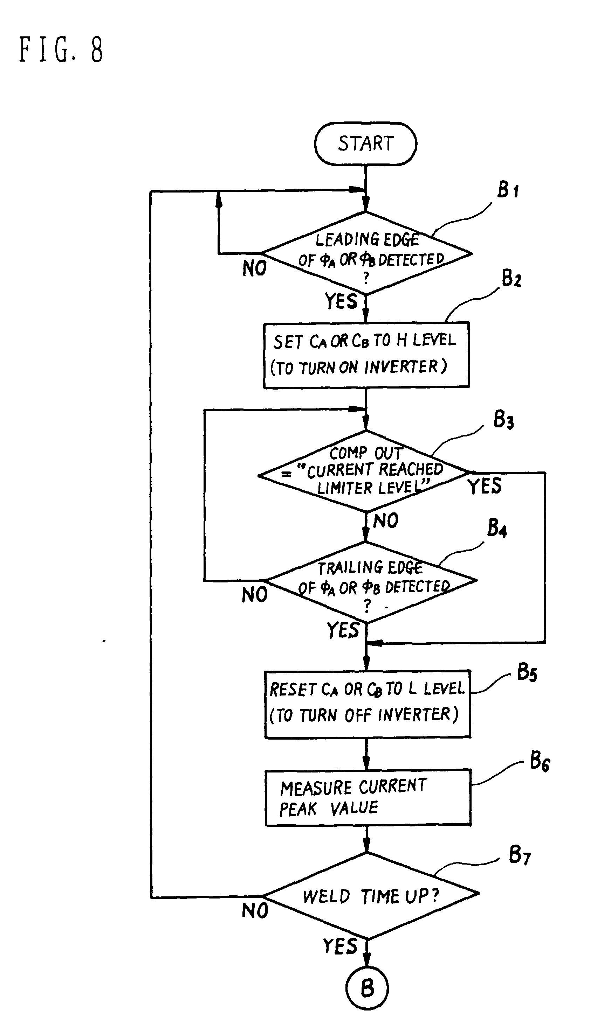

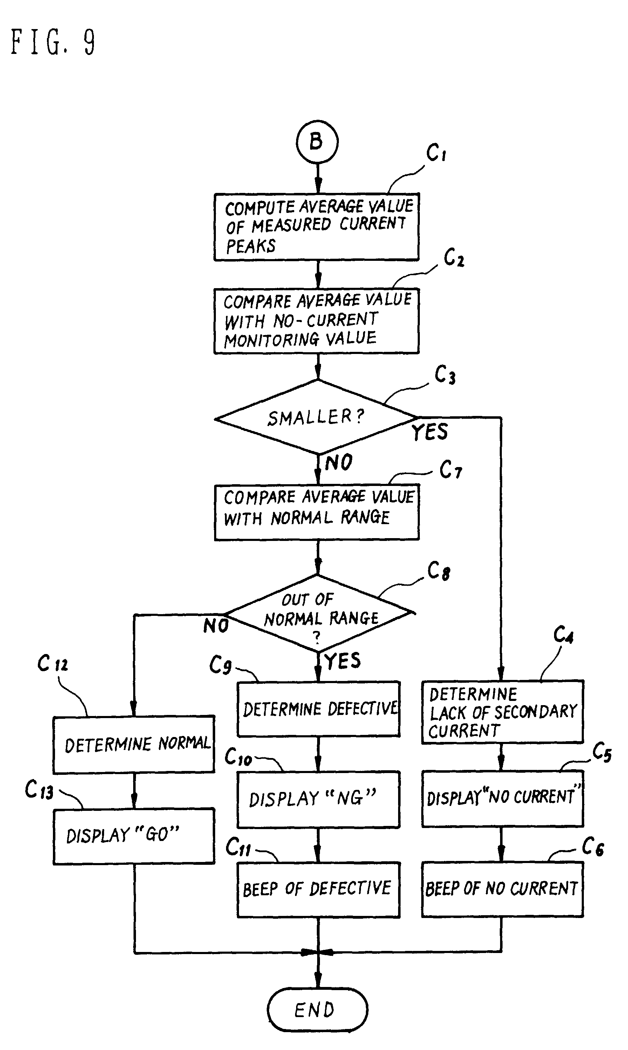

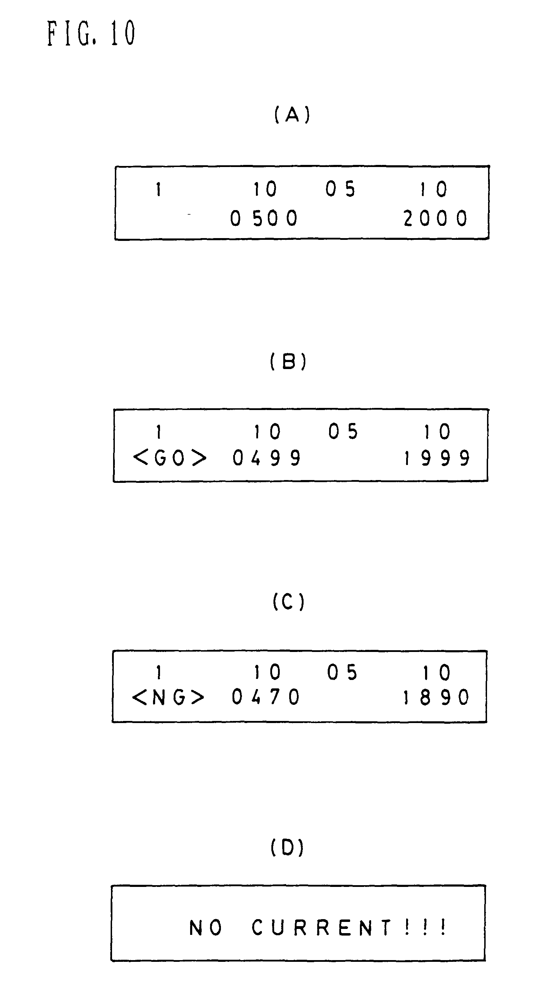

Referring to Fig.7, there are shown signal waveforms in the arrangement of Fig.6. They are to illustrate the current limiter feature and monitoring feature of the second embodiment of the invention. Figs.8 and 9 are flowcharts of routines executed by CPU 40, showing an operation of the second embodiment. Fig.10 shows visual presentations visually displayed on a screen of the display 68 in the present control apparatus. An operation of the second embodiment will now be described by reference to Figs.7 to 9.

When CPU 40 receives a clock φ_{A} from the clock generator 63 (step B₁), CPU 40 sets the control signal C_{A} to high level at a leading edge of φ_{A} to thereby turn on GTR 18 and 24 (step B₂). In response to the turning-on of the GTR 18 and 24, the primary current I₁ generates and develops.

When the primary current I₁ "normally" develops the detected signal EI thereof will reach, within a present cycle, the limiter level KI, thus changing the comparator 59 output to a high-level from a low-level. In response to the loading edge (step B₃), CPU 40 sets the control signal C_{A} to low level to thereby turn-off the GTR 18 and 24 (step B₅).

Depending on the operational condition, such as increased resistance of the secondary circuit or a drop in the supplied three-phase AC voltage, the primary current I₁ cannot develop sufficiently so that the detected signal EI will not reach the limiter level KI within that cycle. In such a case, CPU 40 will see a trailing edge of the clock signal φ_{A} and then change the control signal C_{A} to a low-level to forcibly turn off the GTR 18 and 24 (steps B4 and B5). The turning-off of the GTR 18 and 24 causes the primary current I₁ to fall.

At the same time, CPU 40 sets the control signal PF to high level, thus causing the sample-and-hold circuit 56 to acquire the instantaneous value IPₙ of the detected current signal EI. The instantaneous value IPₙ is called current peak value since it represents a maximum of the current waveform within a cycle. Then CPU 40 reads the current peak value IPₙ via the analog-to-digital converter 58 and stores it into the storage 64 at a predetermined storage location (step B₆).

In a cycle of clock φ_{B}, CPU 40 supplies a high-level pulse of the control signal C_{B} to the GTR 20 and 22 in the inverter 16 when it has detected a leading edge of the clock signal φ_{B}. The operation of CPU 40 in a cycle of clock φ_{B} is essentially identical with that of CPU 40 in a cycle of clock φ_{A}. In this manner CPU 40 performs current limiter control and current peak (IPₙ) measuring on a cycle-by-cycle basis.

After the welding operation (step B₇), CPU 40 computes, from all records of current peak data IP₁, IP₂, etc., of all cycles of the welding operation, an overall or entire current average value IP_{M} thereof (step C₁). Then CPU 40 compares the entire current average value IP_{M} with the first monitoring value [Ij] for lack of secondary current determination (step C₂). If the IP_{M} is smaller than [Ij] (step C₃), CPU 40 determines lack of the secondary current in the secondary circuit (step C₄). Then CPU 40 causes the display unit 68 to visually display a message of "NO CURRENT !!!" (step C₅). At the same time CPU 40 causes buzzer 70 to sound a predetermined beep to inform an operator nearby of the abnormal condition of no current in the secondary circuit (step C₆).

If the averaged current peak value IP_{M} is found greater than or equal to the first monitoring value [Ij] at step C₃, CPU 40 compares the averaged peak value IP_{M} with the second monitoring value [Ik] for normal/defective welding determination (step C₇). If the averaged peak value IP_{M} goes out of the normal range [Ik] (for instance the desired peak value plus minus 5 percent) (step C₈), CPU 40 determines defective welding operation (step C₉). Then CPU 40 causes display unit 68 to display a message of defective operation, say, "NG" (step C₁₀), and controls the buzzer 70 to emit a predetermined beep or buzzing sound (step C₁₁), thus notifying a nearby operator of defective welding operation, implying defective welded results.

In the second comparing operation above (step C₇), if the averaged peak value IP_{M} falls within the normal range [Ik] (for instance the preselected desired peak value plus minus 5 percent) at step C₈, CPU 40 determines normal welding operation (step C₁₂). Then CPU 40 control the display 68 to visually present a message of normal welding operation, "GO", meaning go ahead to the next welding operation (step C₁₃). In this case no buzzer sound is emitted because no inspection on a part of the operator is required.

Referring to Fig.10, part (A) shows a visual presentation on the display screen, representing preselected values of welding operation. In the visual presentation of part (A), a numeral "1", at top or first line and at leftmost. indicates a welding schedule number. A numeral "10". next to the schedule number indicates a first weld time expressed in milliseconds. The next right numeral "05" indicates a cool time in terms of milliseconds. The next right numeral "10" indicates a second weld time in terms of milliseconds. In the second or bottom line, at left, a numeral "0500" indicates a preselected value of the secondary current of the first welding operation, in units of kilo ampere . The next right numeral "2000" indicates a preselected value of the secondary current of the second welding operation in terms of kiloamperes.

Parts (B) and (C) of Fig.10 show monitoring presentations including monitored results of welding operation. In part (B) of Fig.10, the second or bottom line, numerals "0499" and "1999" indicate measured values of secondary current peak (average) of the first and second welding operations, respectively. Also, in the part (C) of Fig.10, the bottom line, numerals "0470" and "1890" represent measured values of secondary current peak (average) of the first and second welding operations. respectively. Since the ratio of the primary current I₁ to the secondary current I₂ is essentially determined by turns ratio of the welding transformer 26, CPU 40 can simply compute a primary current selected value from a secondary current selected value and compute a secondary current measured value (secondary current peak average value) from a primary current measured value (primary current peak average value).

In this manner, the second embodiment of the inverter resistance welding control apparatus, which uses a current limiter control, detects an actual current peak value of each clock cycle during the welding operation. After the welding operation, the apparatus computes an average of current peak values, and compares it with a predetermined monitoring value for normal/defective welding determination to thereby determine whether the welding operation has been performed normally or not. The apparatus displays the results of the determining together with the current measured data (electric current peak averaged value).

In doing so, the operation of the current limiter control is monitored and displayed or output by means of a visual display unit or printer, thus eliminating the need of the visual inspection on the part of a nearby operator to thereby contribute to improved quality control and increased productivity. Further, since the results of the monitoring are informed by a buzzer sound, an operator can easily detect such a buzzer sound without looking at the control panel, thus, easily informed of a defective welding operation, so that the operability on the part of an operator will become more efficient. At the beginning cycles of welding operation, the electric current peak rises or develops from one cycle to another. Thus, those records of the measured current data of the beginning cycles can be excluded from computing the current peak averaged value. The measured current peak data of the ending cycles of the welding operation can also be excluded from computing the entire current peak average of the welding operation.

The second embodiment of the inverter resistance welding control apparatus also contemplates the magnetizing current of the welding transformer 26, as experienced in the entire absence of the secondary current. That is, the control apparatus preselects or determines a monitoring value as a function of the magnetizing current for detecting no or lack of secondary current. The control apparatus, which operates based on a current limiter control with a primary current feedback loop, compares the current peak average value with a monitoring value for no welding current detection and determination. In doing so, the control apparatus can detect an abnormal condition of the secondary circuit i.e., lack of the secondary current even from the primary circuit, without regard to the magnetizing current of the welding transformer 26, with high reliability. In addition, the control apparatus informs a nearby operator of such abnormal condition of the secondary circuit by means of a buzzer sound as well as visual presentation, so that the operability will be significantly increased.

Whereas, in the second embodiment, the check for no secondary current is done after the welding operation, it can be modified so as to check it during the welding operation. In such a case, it may be preferred to stop the electric power supply by stopping the inverter operation immediately after no or lack or secondary current has been detected. Various other modifications could be obvious within an ordinary skill in the art. For example, a current sensor 50 may be provided in a primary conductor between the inverter 16 and the welding transformer 26 at an output from the inverter 16. In such a case, the current sensor 50 generates a signal EI having an AC current waveform of the inverter 16 output. An absolute circuit may be connected to the current sensor 50 output to obtain a signal having a single polarity as shown in Fig.7. To monitor current limiter function or operation, a current sensor in the form of, say, toroidal coil may be provided in the secondary circuit to detect secondary current I₂ if desired. The illustrated embodiment and modifications described so far are only illustrative. Therefore, the scope of the invention should be limited solely by the appended claims.

## Claims

1. An inverter resistance welding electric power supply apparatus for controlling switching operation of the inverter in such a manner that primary or secondary current of an inverter resistance welding machine generally matches a desired preselected current value, comprising:
clock generating means for generating a clock that defines a unit switching cycle of said inverter;
reference value preselecting means for preselecting a predetermined reference value corresponding to said preselected current value;
current detecting means for detecting said current during welding operation;
inverter controlling means for controlling said inverter on a switching cycle-by-cycle basis in such a manner that said inverter is turned on in response to a leading edge of said clock and that said inverter is turned off either when an output signal from said current detecting means has reached said reference value or when said clock has reached trailing edge thereof;
average current value measuring means for measuring, from a detected current signal from said current detecting means, average current value on a switching cycle-by-cycle basis; and
output means for outputting, based on said average current values provided by said average current measuring means during the welding operation, current monitoring information useful to determine whether the welding operation has been performed normally or not.

2. The inverter resistance welding electric power supply apparatus of claim 1, wherein said output means comprises:
average value computing means for computing an average current value throughout the welding operation; and
display means for outputting said average current value from said average current value computing means, as said current monitoring information.

3. The inverter resistance welding electric power supply apparatus of claim 1. wherein said output means comprises;
average value computing means for computing an average current value throughout the welding operation;
monitoring value preselecting means for preselecting a desired monitoring value;
determining means for comparing said average current value from said average value computing means with said monitoring value to thereby determine whether the welding operating has been performed normally or not; and
output means for outputting results of said determining, as said current monitoring information.

4. An inverter resistance welding electric power supply apparatus for controlling switching operation of the inverter in such a manner that primary or secondary current of an inverter resistance welding machine generally matches a desired preselected current value, comprising:
clock generating means for generating a clock that defines a unit switching cycle of said inverter;
reference value preselecting means for preselecting a predetermined reference value corresponding to said preselected current value;
current detecting means for detecting said current during welding operation;
inverter controlling means for controlling said inverter on a switching cycle-by-cycle basis in such a manner that said inverter is turned on in response to a leading edge of said clock and that said inverter is turned off either when an output signal from said current detecting means has reached said reference value or when said clock has reached a trailing edge thereof;
effective current value measuring means for measuring an effective value of said current from a detected current signal from said current detecting means on a switching cycle-by-cycle basis; and
output means for outputting, based on said effective current values provided by said effective current value measuring means during welding operation. current monitoring information useful to determine whether the welding operation has been performed normally or not.

5. The inverter resistance welding electric power supply apparatus of claim 4, wherein said output means comprises:
average value computing means for computing an average value of said effective current values in the welding operation; and
display means for outputting said computed average value of said effective values as said current monitoring information.

6. The inverter resistance welding electric power supply apparatus of claim 4, wherein said output means comprises:
average value computing means for computing an average value of said effective current values throughout welding operation;
monitoring value preselecting means for preselecting a desired monitoring value;
determining means for comparing said computed average value of said effective current values from said average value computing means with said monitoring value to thereby determine whether the welding operation has been performed normally or not; and
output means for outputting results of said determining as said current monitoring information.

7. An inverter resistance welding control apparatus for controlling switching operation of the inverter in such a manner that primary or secondary current of an inverter resistance welding machine generally matches a desired preselected current value, comprising:
clock generating means for generating a clock that defines a unit switching cycle of said inverter;
limiter level preselecting means for preselecting a predetermined limiter level corresponding to said preselected current value;
current detecting means for detecting said current during welding operation;
inverter controlling means for controlling said inverter on a switching cycle-by-cycle basis in such a manner that said inverter is turned on in response to a leading edge of said clock and that said inverter is turned off either when an output signal from said current detecting means has reached said limiter level or when said clock has reached a trailing edge thereof;
current measuring means for measuring value of said current at a time when said inverter is turned off;
normal/defective determining means for determining, based on data of said measured values of said current measured by said current measuring means during the welding operation, as to whether the welding operation has been performed normally or not; and
output means for outputting results of said determining

8. The inverter resistance welding control apparatus of claim 7, wherein said normal/defective determining means comprises:
average value computing means for computing an average value of said measured current values provided by said current measuring means during the welding operation;
monitoring value preselecting means for preselecting a monitoring value; and
comparing means for comparing said computed average value form said average value computing means with said monitoring value.

9. An inverter resistance welding control apparatus for use in an inverter resistance welding machine in which a commercial AC current is rectified into DC current which is converted by an inverter into pulsed AC current of predetermined frequency which is transformed by a welding transformer into a transformed pulsed AC current which is rectified by a rectifier into DC current which is supplied to a workpiece via a welding electrode, comprising:
primary current measuring means for measuring primary current of said resistance welding machine; and
lack-of-current detecting means for comparing a measured value of primary current provided by said primary current measuring means with a predetermined monitoring value which is smaller than a preselected value of desired current and greater than a value of magnetizing current of said welding transformer to thereby operatively detect lack of secondary current of said resistance welding machine.
